# EUROPEAN PATENT APPLICATION

(11) **EP 4 782 912 A1**
(43) Date of publication of application: **29.07.2026**
(21) Application number: 24866966.5
(22) Date of filing: 22.06.2024
(51) Int. Cl.: G02F 1/03

(54) **OPTICAL MODULATOR**

(30) Priority: 18.09.2023 CN 202322529355 U
(71) Applicant: Innolight Technology (Suzhou) Ltd., Suzhou, Jiangsu 215000 (CN)
(72) Inventor: YAN, Dongdong, Suzhou, Jiangsu 215000 (CN); LI, Xianyao, Suzhou, Jiangsu 215000 (CN)
(74) Representative: Becker, Eberhard
(86) International application number: PCT/CN2024/100813
(87) International publication number: WO 2025/060547

(57) **Abstract**

An optical modulator, comprising: a first dielectric layer (10); a second dielectric layer (20), which is located on the first dielectric layer (10), wherein a waveguide structure (210) and a first metal layer (220) are provided in the second dielectric layer (20), and the waveguide structure (210) is electrically connected to the first metal layer (220); an insulating layer (30), which is located on the second dielectric layer (20); a third dielectric layer (40), which is located on the insulating layer (30), wherein a second metal layer (410) is provided in the third dielectric layer (40), and the second metal layer (410) is electrically connected to the first metal layer (220) by means of a via hole (50); and a metal gate layer (60), which comprises a plurality of metal gate structures (610) that are arranged spaced apart, wherein the metal gate structures (610) are periodically arranged in a signal transmission direction of the waveguide structure (210), and the metal gate layer (60) is configured to be respectively insulated from the first metal layer (220) and the second metal layer (410). The waveguide structure (210), the first metal layer (220) and the second metal layer (410) form a new "sandwich" modulator structure, removing a substrate from the original structure; and the metal gate layer (60) can reduce the transmission speed of an electrical signal, thereby solving the electro-optical mismatch problem, and increasing the electro-optical bandwidth of the optical modulator.

## Description

This application claims the priority benefit to China patent application No. 202322529355.7, with an invention title, "OPTICAL MODULATOR", filed on September 18, 2023, in the China National Intellectual Property Administration. The entirety of the above-mentioned patent application is hereby incorporated by reference herein and made a part of this specification.

### Technical Field

The present utility model relates to a field of optical communication technology, and in particular to an optical modulator.

### Related Art

In silicon-based integrated optoelectronic systems, a traveling wave electrode modulator based on a SOI (silicon-on-insulator) process generally consists of a light waveguide load and a traveling wave electrode. Electromagnetic waves are transmitted between the traveling wave electrodes, and optical carriers are transmitted in the load light waveguide. During the transmission of the optical carriers and the electromagnetic waves, the interaction between the electromagnetic waves and the optical carriers causes changes in the phase of the optical carriers, thereby completing the modulation from electrical signals to optical signals. The performance indicators for evaluating the traveling wave electrode modulator mainly include electro-optical bandwidth and impedance.

In related technology, silicon-based traveling wave electrode modulators are mainly manufactured based on CMOS (Complementary Metal-Oxide-Semiconductor) SOI process, which has the advantages of low cost and easy large-scale fabrication. A structure of the traveling wave electrode modulator based on CMOS-SOI process includes, from top to bottom, a top silicon layer, an insulating layer, and a silicon substrate. Since the silicon substrate and the doped contact regions on both sides of the light waveguide form a parasitic capacitance structure by the insulating layer, the electro-optical bandwidth and impedance of the traveling wave electrode modulator may be reduced, thereby degrading the modulation performance of the modulator on the optical signals.

### Summary of the utility model

Based on this, it is necessary to provide an optical modulator to address the aforementioned technical problems, which increases an electro-optical bandwidth of the optical modulator.

In order to achieve the aforementioned purpose, the present application provides an optical modulator. The optical modulator includes:
a first dielectric layer;
a second dielectric layer, located on the first dielectric layer, where a waveguide structure and a first metal layer are provided in the second dielectric layer, and the waveguide structure is electrically connected to the first metal layer;
an insulating layer, located on the second dielectric layer;
a third dielectric layer, located on the insulating layer, where a second metal layer is provided in the third dielectric layer, and the second metal layer is electrically connected to the first metal layer through a via hole;
a metal gate layer, including multiple metal gate structures arranged spaced apart, where each of the metal gate structures is periodically arranged in a signal transmission direction of the waveguide structure, and the metal gate layer is insulated from the first metal layer and the second metal layer respectively.

In one of the embodiments, the second metal layer is electrically connected to the waveguide structure by the via hole and each of the first metal layers.

In one of the embodiments, the first dielectric layer is a silicon layer or a glass material layer.

In one of the embodiments, the first dielectric layer is formed on the second dielectric layer through bonding.

In one of the embodiments, the insulating layer and the third dielectric layer are manufactured from the same material.

In one of the embodiments, the metal gate layer is provided within the third dielectric layer and arranged spaced apart from the second metal layer, or the metal gate layer is provided within the second dielectric layer and arranged spaced apart from the first metal layer.

In one of the embodiments, the metal gate layer is provided in the second dielectric layer and the third dielectric layer, and the metal gate layer is arranged spaced apart from the first metal layer and the second metal layer respectively.

In one of the embodiments, the metal gate layer includes a first sub gate layer and a second sub gate layer, where the first sub gate layer and the second sub gate layer are symmetrically located on both sides of the second metal layer respectively, and the first sub gate layer and the second sub gate layer respectively include multiple gate structures periodically arranged in the signal transmission direction of the waveguide structure.

In one of the embodiments, the optical modulator includes at least two layers of the second metal layer, where the at least two layers of the second metal layer are electrically connected by via holes, the metal gate layer includes multiple first sub-gate structures periodically arranged in the signal transmission direction of the waveguide structure, and each of the first sub-gate structures is located in a gap between two adjacent via holes above the same second metal layer.

In one of the embodiments, the metal gate layer further includes multiple second sub-gate structures periodically arranged in the signal transmission direction of the waveguide structure, where each of the first sub-gate structures is provided on the insulating layer, and is alternatively arranged with each of the second sub-gate structures in the signal transmission direction of the waveguide structure.

The optical modulator mentioned above includes a metal gate layer and a first dielectric layer, a second dielectric layer, an insulating layer and a third dielectric layer sequentially stacked from bottom to top. The second dielectric layer is provided with a waveguide structure and a first metal layer. The third dielectric layer is provided with a second metal layer. The first metal layer is electrically connected to the waveguide structure and the second metal layer respectively by a via hole, forming a new "sandwich" structure. The first dielectric layer replaces a substrate layer based on CMOS-SOI process in the related technology. The first dielectric layer and the waveguide structure do not form parasitic capacitance. Compared with the old-type optical modulator (the substrate layer, the waveguide structure layer, and the oxide layer) in which parasitic capacitance exists between the substrate layer and the waveguide structure, the optical modulator provided in the present application increases the electro-optical bandwidth of the optical modulator, thereby improving the modulation performance of the optical modulator for optical signals. In addition, the metal gate layer includes metal gate structures periodically arranged in the signal transmission direction of the waveguide structure, which may effectively reduce the transmission speed of electromagnetic waves, that is, slowing down the transmission speed of electromagnetic waves, so that the transmission speed of electromagnetic waves matches the transmission speed of light, solving the issue of electro-optical mismatch in the electro-optical modulator, and increasing the electro-optical bandwidth of the modulator.

### Brief description of the drawings

FIG. 1 is one of the schematic diagrams of a cross-sectional structure of an optical modulator according to an embodiment;
FIG. 2 is one of the schematic diagrams of a three-dimensional structure of an optical modulator according to an embodiment;
FIG. 3 is a second schematic diagram of a cross-sectional structure of an optical modulator according to an embodiment;
FIG. 4 is a second schematic diagram of a three-dimensional structure of an optical modulator according to an embodiment;
FIG. 5 is a third schematic diagram of a three-dimensional structure of an optical modulator according to an embodiment;
FIG. 6 is a third schematic diagram of a cross-sectional structure of an optical modulator provided according to an embodiment;
FIG. 7 is a schematic diagram of a three-dimensional structure of the optical modulator in FIG. 6 according to an embodiment;
FIG. 8 is a fourth schematic diagram of a three-dimensional structure of an optical modulator according to an embodiment;
FIG. 9 is a fourth schematic diagram of a cross-sectional structure of an optical modulator provided according to an embodiment;
FIG. 10 is a schematic diagram of a three-dimensional structure of the optical modulator in FIG. 9 according to an embodiment;
FIG. 11 is a fifth schematic diagram of a cross-sectional structure of an optical modulator provided according to an embodiment;
FIG. 12 is a schematic diagram of a three-dimensional structure of the optical modulator in FIG. 11 according to an embodiment;
FIG. 13 is a fifth schematic diagram of a cross-sectional structure of an optical modulator according to an embodiment.

### Description of reference numerals

10: first dielectric layer, 20: second dielectric layer, 210: waveguide structure, 211: light waveguide, 212: slab structure, 213: contact structure, 220: first metal layer, 30: insulating layer, 40: third dielectric layer, 410: second metal layer, 50: via hole, 60: metal gate layer, 610: metal gate structure, 620: first sub gate layer, 630: second sub gate layer, 640: first sub gate structure, 650: second sub gate structure.

### Description of the embodiments

For ease of understanding the utility model, the utility model will be described more fully below with reference to the related drawings. The preferred embodiments of the utility model are shown in the drawings. However, the utility model may be implemented in many different forms and is not limited to the examples described herein. On the contrary, the purpose of providing these embodiments is to make the disclosure of the utility model more thorough and comprehensive.

Unless otherwise defined, all technical and scientific terms used herein have the same meaning as commonly understood by those skilled in the technical field of the utility model. The terms used herein in the specification of the utility model are only for the purpose of describing specific embodiments and are not intended to limit the utility model. The term "and/or" used herein includes any and all combinations of one or more related listed items.

In the description of the utility model, it should be understood that the orientation or positional relationships indicated by the terms "upper", "lower", "vertical", "horizontal", "inner", and "outer" are based on the method or positional relationships shown in the drawings, and are only for the convenience of describing the utility model and simplifying the description, rather than indicating or implying that the referred device or element must have a specific orientation, be constructed and operated in a specific orientation, and therefore should not be understood as a limitation of the utility model.

As stated in the related art, for the silicon-based traveling wave electrode modulator based on a CMOS-SOI process, a film layer where a waveguide is located is only separated from a substrate layer by an insulating layer, and the substrate itself has a certain resistivity, so the substrate may be regarded as a conductor with low conductivity. Moreover, the waveguide, a slab layer, and a contact layer are generally silicon with a certain doping concentration, and the electrical properties thereof are already close to those of a conductor, which makes the film layer where the waveguide, the slab layer, and the contact layer are located and the substrate layer to form a parallel plate capacitor structure having a large parasitic capacitance. The large parasitic capacitance leads to a significant reduction in the bandwidth and impedance of the traveling wave electrode modulator, degrading the modulation performance of the traveling wave electrode modulator. In view of this, the present application provides a modulator, which forms a new "sandwich" modulator structure without a substrate, eliminates the parasitic capacitance between a second dielectric layer and the substrate layer, increases the electro-optical bandwidth of the modulator, and further improves the modulation performance of the modulator on optical signals.

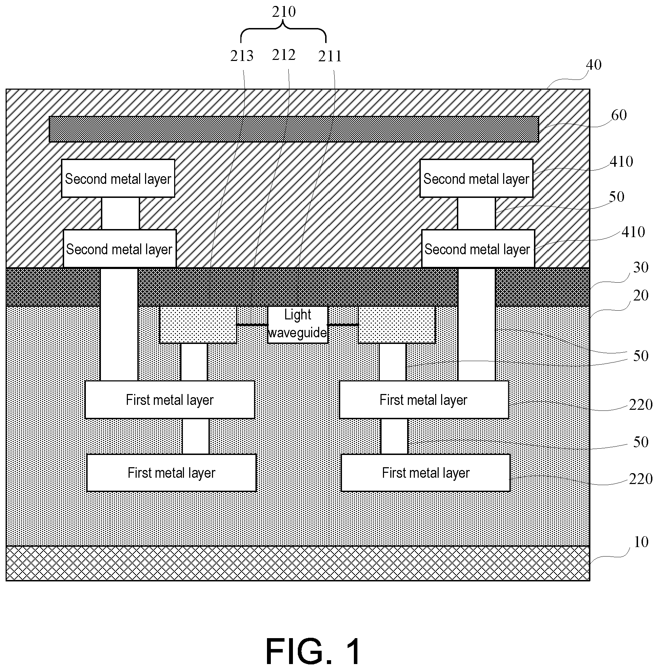

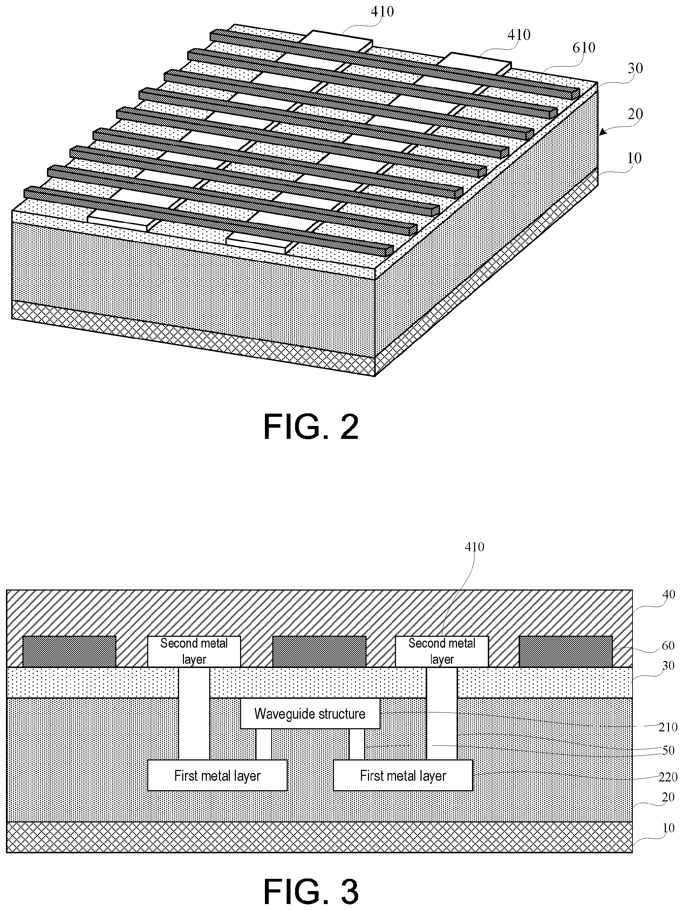

In an embodiment, as shown in FIG. 1 and FIG. 2, an optical modulator is provided. The optical modulator includes a first dielectric layer 10, a second dielectric layer 20, an insulating layer 30, a third dielectric layer 40, and a metal gate layer 60 sequentially stacked from bottom to top.

The second dielectric layer 20 is provided with a waveguide structure 210 and a first metal layer 220. The waveguide structure 210 is electrically connected to the first metal layer 220. The waveguide structure 210 may include a light waveguide 211, a slab structure 212, and a contact structure 213. The slab structure 212 and the contact structure 213 are respectively located on both sides of the light waveguide 211 and are symmetrically disposed. The light waveguide 211 is electrically connected to the contact structure 213 through the slab structure 212, and is configured to transmit optical signals. The slab structure 212 and the contact structure 213 may be configured to transmit electrical signals. The waveguide structure 210 is electrically connected to the first metal layer 220 by a via hole 50. The third dielectric layer 40 is provided with a second metal layer 410. The second metal layer 410 is electrically connected to the first metal layer 220 by the via hole 50. The via hole 50 may be a continuous conductive panel structure, and may also be a conductive structure with multiple gaps. A material and a structure of the via hole 50 are not specifically limited herein.

The metal gate layer 60 includes multiple metal gate structures 610 arranged spaced apart. The gate structures 610 are periodically arranged in the signal transmission direction of the waveguide structure. The metal gate layer 60 is insulated from the first metal layer 220 and the second metal layer 410 respectively. The period and duty cycle of the metal gate structure 610 may be designed through simulation, so that the transmission speed of electromagnetic waves is consistent with the transmission speed of light, to solve an issue of electro-optical mismatch in the electro-optical modulator. Optionally, the period of the metal gate structure 610 may be set to 4 µm to 15 µm, and the duty cycle may be set to 10% to 25%, so that the group velocity of the electrical signal may match the group velocity of the optical carrier.

In the optical modulator mentioned above, the first dielectric layer 10 replaces the substrate layer based on the CMOS-SOI process in the related art. The first dielectric layer 10 and the waveguide structure 210 do not form parasitic capacitance. Compared with the old-type optical modulator (the substrate layer, the waveguide structure layer, and the oxide layer) in which parasitic capacitance exists between the substrate layer and the waveguide structure 210, the optical modulator provided in the present application increases the electro-optical bandwidth of the optical modulator, thereby improving the modulation performance of the optical modulator on optical signals. In addition, the metal gate layer 60 includes metal gate structures 610 periodically arranged in the signal transmission direction of the waveguide structure, which may effectively reduce the transmission speed of electromagnetic waves, that is, slowing down the transmission speed of electromagnetic waves, so that the transmission speed of electromagnetic waves matches the transmission speed of light, solving the issue of electro-optical mismatch in the electro-optical modulator and increasing the electro-optical bandwidth of the modulator.

Exemplarily, the first metal layer 220 may be one layer or multiple layers. In the embodiments of the present application, the number of layers of the first metal layer 220 is not limited. In a case that the optical modulator includes multiple first metal layers 220, one of the metal layers 220 is electrically connected to the contact structure 213 by the via hole 50. Each first metal layer 220 is stacked in a direction from the second dielectric layer 20 toward the first dielectric layer 10. Two adjacent first metal layers 220 are electrically connected by the via hole 50. Exemplarily, the first metal layer 220 is symmetrically disposed on both sides of the light waveguide 211.

Exemplarily, the second metal layer 410 may be one layer or multiple layers. In the embodiments of the present application, the number of layers of the second metal layer 410 is not limited. In a case that the optical modulator includes multiple second metal layers 410, one of the second metal layers 410 is adjacent to the insulating layer 30 and is electrically connected to the first metal layer 220 by the via hole 50. Each second metal layer 410 is stacked in a direction from the first dielectric layer 10 toward the insulating layer 30. Two adjacent second metal layers 410 are electrically connected by the via hole 50. Exemplarily, the second metal layer 410 is symmetrically disposed on both sides of the light waveguide 211.

Exemplarily, the total number of layers of the first metal layer 220 and the second metal layer 410 is 6 to 8 layers. In practical applications, the number of layers of the first metal layer 220 and the second metal layer 410 may be set according to application requirements, which is not limited herein.

Exemplarily, the first dielectric layer 10 may be a silicon layer or a glass material layer. The glass material includes but is not limited to silicon oxide, boron oxide, etc. The first dielectric layer 10 is equivalent to supporting silicon and functions as a substrate. Exemplarily, the second dielectric layer 20 and the third dielectric layer 40 may be any one or more of any suitable dielectric layers such as a silicon nitride layer and a silicon dioxide layer. Exemplarily, the second dielectric layer 20 and the third dielectric layer 40 may be manufactured by multi-layer deposition of silicon dioxide and silicon nitride. Exemplarily, the insulating layer 30 may be an oxide layer, such as a silicon dioxide layer. Exemplarily, the insulating layer 30 and the third dielectric layer 40 may be manufactured from the same material. For example, both the insulating layer 30 and the third dielectric layer 40 are silicon dioxide layers. Exemplarily, the waveguide structure 210 may be a silicon structure. A shielding structure 50 may be a metal structure, such as copper and aluminum. The materials of each layer and each structure are not limited herein.

In practical applications, an optical modulator may be obtained by performing processes such as etching and deposition on an SOI wafer based on CMOS-SOI technology. The SOI wafer includes a substrate layer, an insulating layer 30, and a crystalline silicon layer stacked in sequence. First, the crystalline silicon layer is etched to form the waveguide structure 210 on the insulating layer 30, including a light waveguide 211, a contact structure 213, and a slab structure 212. Next, through a doping process, the waveguide structure 210 is doped with carriers to form electrical connection with the upper metal. Afterwards, a metal deposition process is used to form the first metal layer 220 electrically connected to the waveguide structure 210, and the second dielectric layer 20 is deposited on the insulating layer 30, where the first metal layer 220 located within the second dielectric layer 20. Thus, the waveguide structure 210 and the first metal layer 220 form a conventional optical modulator in the related art.

Based on the aforementioned processes of the present application, a bonding method may be used to form the first dielectric layer 10 on the second dielectric layer 20, and the original substrate layer is removed. After the structure is inverted, the insulating layer 30 is etched to form via holes, a metal deposition process is used to form the second metal layer 410 and the metal gate layer 60 on the insulating layer 30, and the third dielectric layer 40 is further deposited on the insulating layer 30, where the second metal layer 410 located within the third dielectric layer 40. The first metal layer 220 and the second metal layer 410 form electrical connection through the via hole 50. Based on this, the waveguide structure 210, the first metal layer 220, and the second metal layer 220 form a new optical modulator with a "sandwich" structure.

The optical modulator mentioned above includes a first dielectric layer 10, a second dielectric layer 20, an insulating layer 30, and a third dielectric layer 40 stacked from bottom to top. The waveguide structure 210 and the first metal layer 220 of the second dielectric layer 20, together with the second metal layer 410 of the third dielectric layer 40, constitute a new optical modulator with a "sandwich" structure. Since in the conventional optical modulator having a substrate layer, the silicon layer where the waveguide structure 210 is located is only separated from the substrate layer by a thickness of one insulating layer 30. The thickness of the insulating layer 30 is generally within 3um, and the substrate layer itself has a certain resistivity (1-3000ohm-cm), which may be regarded as a conductor with low conductivity. Furthermore, since the waveguide structure 210 is silicon with certain doping, the electrical property thereof is close to that of a conductor, thereby making a parallel plate capacitor to be formed between the silicon layer where the waveguide structure 210 is located and the substrate layer. The parallel plate capacitor has a large parasitic capacitance, which leads to a significant reduction in the bandwidth and impedance of the optical modulator, and degrades the performance of the traveling wave electrode modulator. In this regard, the new optical modulation layer according to the embodiments of the present application removes the original substrate layer, so that the silicon layer where the waveguide structure 210 is located may no longer form a parallel plate having the substrate layer. That is, the parasitic capacitance between the waveguide structure 210 and the substrate is eliminated, which avoids the issue of reduced bandwidth and impedance of the optical modulator caused by parasitic capacitance, and improves the modulation performance of the optical modulator. In addition, the optical modulator provided by the embodiments of the present application further includes a metal gate layer 60. The metal gate layer 60 includes metal gate structures 610 periodically arranged in the signal transmission direction of the waveguide structure, which may effectively reduce the transmission speed of electromagnetic waves, that is, slowing down the transmission speed of electromagnetic waves, so that the transmission speed of electromagnetic waves matches the transmission speed of light, solving the issue of electro-optical mismatch in the electro-optical modulator and increasing the electro-optical bandwidth of the modulator.

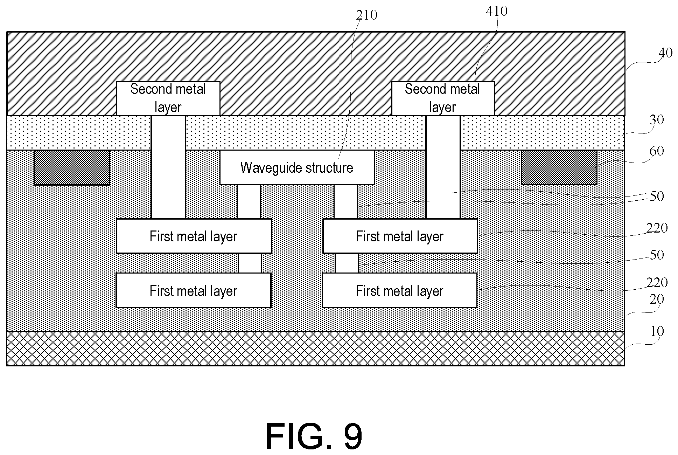

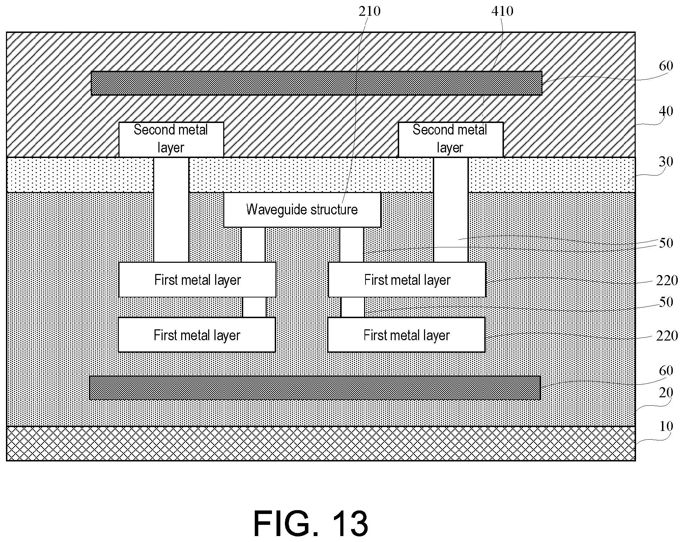

Exemplarily, as shown in FIG. 3 to FIG. 8, the metal gate layer 60 may be provided within the second dielectric layer 20 and spaced apart from the first metal layer 220, and the metal gate layer 60 is not electrically connected to the first metal layer 60 and the waveguide structure 210 respectively. Exemplarily, as shown in FIG. 9 to FIG. 12, the metal gate layer 60 may also be disposed in the third dielectric layer 40 and spaced apart from the second metal layer 410. That is, the metal gate layer 60 is not electrically connected to the second metal layer 410. Exemplarily, as shown in FIG. 13, the metal gate layer 60 may be provided within the second dielectric layer 20 and the third dielectric layer 40, and spaced apart from the waveguide structure 210, the first metal layer 220, and the second metal layer 410 respectively. In a case where the metal gate layer 60 is provided within the second dielectric layer 20 and the third dielectric layer 40, the metal gate layer 60 may have the metal gate layer 60 structure shown in FIG. 3 to FIG. 12. It should be noted that FIG. 3 to FIG. 13 are only exemplary illustrations and are not intended to limit the present application.

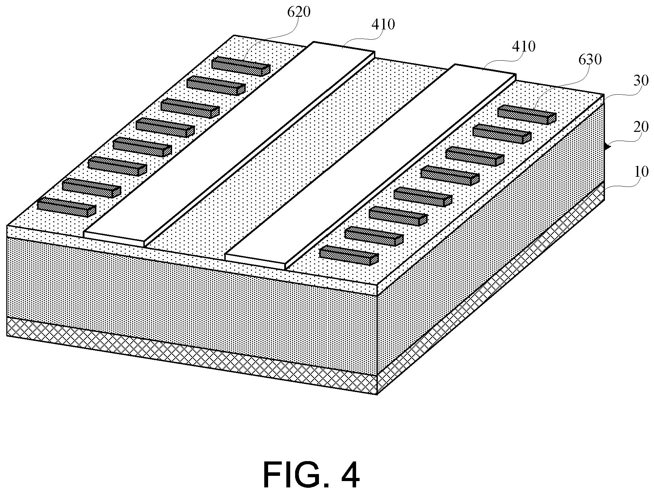

Taking the metal gate layer 60 provided within the third dielectric layer 40 as an example, exemplarily, as shown in FIG. 3 and FIG. 4, the metal gate layer 60 includes a first sub gate layer 620 and a second sub gate layer 630. The first sub gate layer 620 and the second sub gate layer 630 are respectively symmetrically located on both sides of the second metal layer 410. The first sub gate layer 620 and the second sub gate layer 630 respectively include multiple gate structures periodically arranged in the signal transmission direction of the waveguide structure 210. In the embodiment of the present application, the periods and duty cycles of the first sub gate layer 620 and the second sub gate layer 630 may be designed through simulation, so that the transmission speed of the electrical signal is consistent with the transmission speed of the optical signal, which is not limited herein.

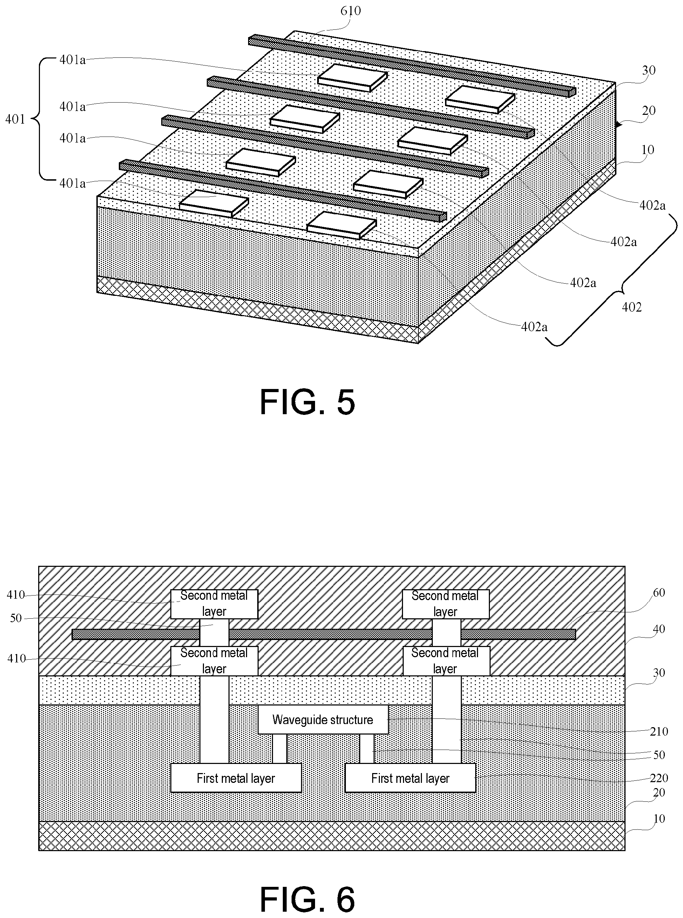

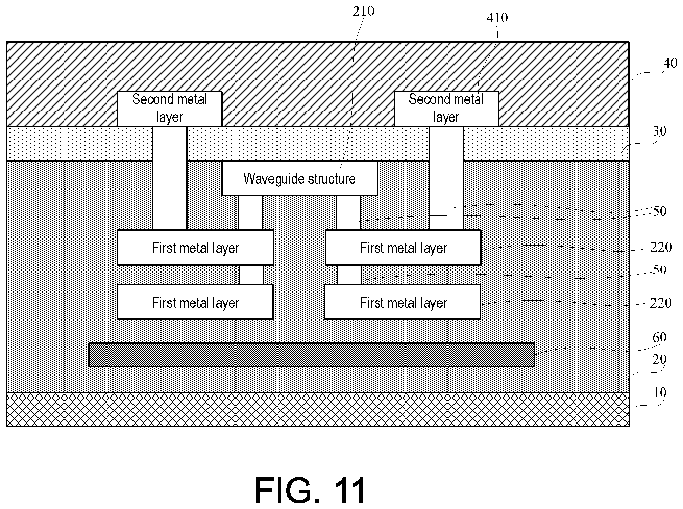

Exemplarily, as shown in FIG. 5, the second metal layer 410 may include a first sub metal layer 401 and a second sub metal layer 402, both of which are spaced apart and arranged in parallel. The first sub metal layer 401 includes multiple first sub metal layers 401a arranged spaced apart in the signal transmission direction of the waveguide structure 210, and the second sub metal layer 402 includes multiple second sub metal layers 402a arranged spaced apart in the signal transmission direction of the waveguide structure 210. Each metal gate structure 610 is located in the gap between two adjacent first sub metal layers 401a and two adjacent second sub metal layers 402a. It should be noted that the metal gate layer structure 610 may also be disposed at any position on both sides of the first sub metal layer 401a and the second sub metal layer 402a, and between the first sub metal layer 401a and the second sub metal layer 402a, and the specific arrangement of the metal gate structure 610 is not limited herein. FIG. 11 is only an exemplary illustration.

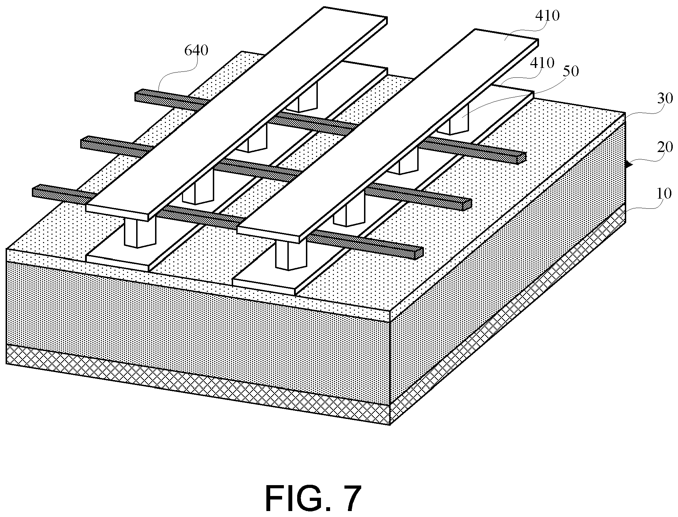

Exemplarily, as shown in FIG. 6 and FIG. 7, in a case where the optical modulator includes at least two layers of the second metal layer 410. The at least two layers of the second metal layer 410 are electrically connected by the via hole 50. The metal gate layer 60 may include multiple first sub gate structures 640 periodically arranged in the signal transmission direction of the waveguide structure 210. Each first sub gate structure 640 is located in the gap between two adjacent via holes 50 above the same second metal layer 410. Each first sub gate structure 640 is insulated from the via holes 50 and each second metal layer 410. Exemplarily, the gap period of the via hole 50 may be N times the period of the first sub gate structure 640, where N is a positive integer greater than or equal to 1. FIG. 13 does not show the third dielectric layer 40 for clear illustration.

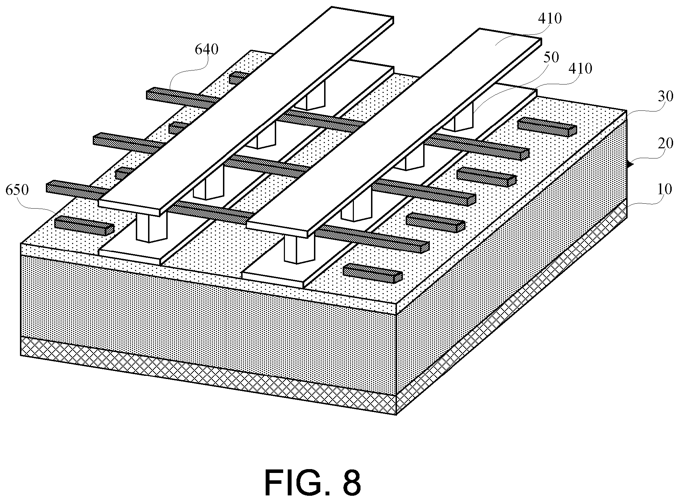

Based on the above embodiments and the optical modulator provided in FIG. 6 and FIG. 7, exemplarily, as shown in FIG. 8, the metal gate layer 60 may also include multiple second sub gate structures 650 periodically arranged in the signal transmission direction of the waveguide structure 210. Each first sub gate structure 640 is provided on the insulating layer 30. Each first sub gate structure 640 and each second sub gate structure 650 are alternately arranged in the signal transmission direction of the waveguide structure 210. Based on this, the electromagnetic wave transmission speed and the light wave transmission speed may be further matched with each other, further increasing the electro-optical bandwidth of the optical modulator.

In the optical modulator according to the aforementioned embodiments, the metal gate layer 60 is located within the third dielectric layer 40. Since the metal gate layer 60 has metal structures periodically arranged in the signal transmission direction of the waveguide structure 210, and the metal gate layer 60 is insulated from the second metal layer 410 within the third dielectric layer 40, the transmission speed of electromagnetic waves may effectively slow down, so that the transmission speed of electromagnetic waves matches the transmission speed of light waves, solving the problem of electro-optical mismatch, and increasing the electro-optical bandwidth of the optical modulator.

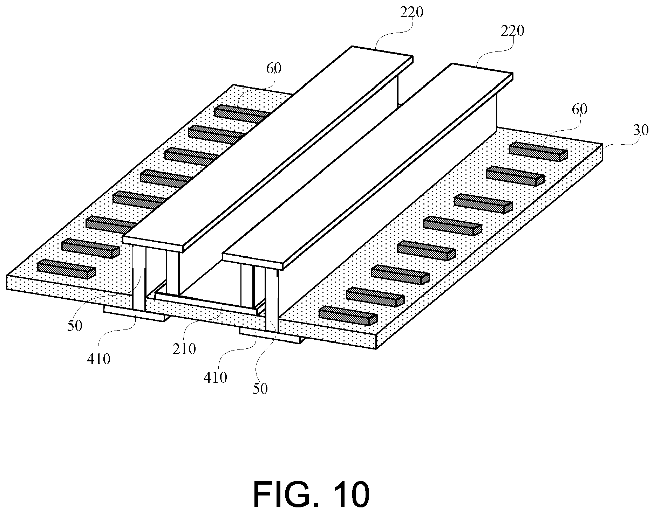

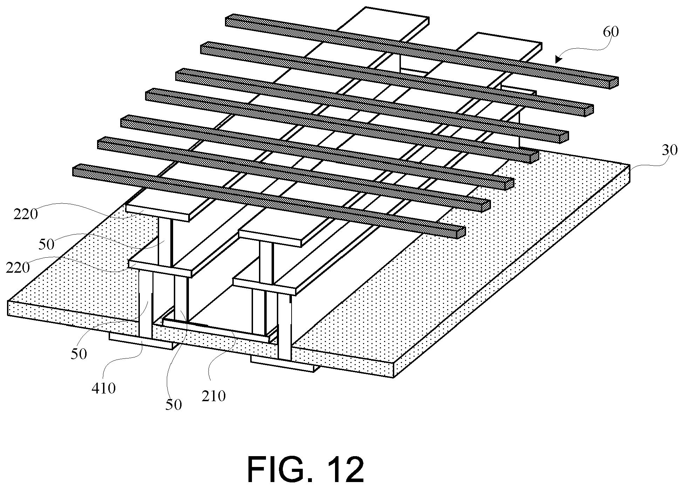

Taking the metal gate layer 60 disposed within the second dielectric layer 20 as an example, exemplarily, as shown in FIG. 9 and FIG. 10, the metal gate layer 60 may include two symmetrically disposed sub gate layers. Each sub gate layer is respectively located on both sides of the first metal layer 220. Optionally, the thickness of each sub gate layer may be the same as the thickness of the second dielectric layer 20, so as to reduce process difficulty and improve product yield. For clearer illustration, FIG. 16 does not show the third dielectric layer 40 and the first dielectric layer 10. Exemplarily, as shown in FIG. 11 and FIG. 12, the metal gate layer 60 may also be located in a region below the bottommost first metal layer 210. For clear illustration, FIG. 12 does not show the third dielectric layer 40 and the first dielectric layer 10.

In the optical modulator according to the aforementioned embodiments, the metal gate layer 60 is located within the second dielectric layer 20. Since the metal gate layer 60 has metal structures periodically arranged in the signal transmission direction of the waveguide structure 210. The metal gate layer 60 is insulated from the second metal layer 410 within the second dielectric layer 20, which may effectively reduce the transmission speed of electromagnetic waves, that is, slowing down the transmission speed of electromagnetic waves, so that the transmission speed of electrical signals matches the transmission speed of optical carriers, solving the issue of electro-optical mismatch in the optical modulator, and increasing the electro-optical bandwidth of the optical modulator.

The technical features of the aforementioned embodiments may be combined in any manner. For brevity, not all possible combinations of the technical features in the aforementioned embodiments are described. However, as long as there is no contradiction in the combinations of these technical features, they should all be considered as within the scope recorded in this specification.

The aforementioned embodiments only express several implementation modes of the utility model, and the descriptions thereof are relatively specific and detailed, but should not be understood as limiting the scope of the utility model patent. It should be noted that for those skilled in the art, several modifications and improvements may be made without departing from the concept of the utility model, and fall within the protection scope of the utility model. Therefore, the protection scope of the utility model patent shall be subject to the appended claims.

## Claims

1. An optical modulator, **characterized in that**, comprising:
a first dielectric layer;
a second dielectric layer, located on the first dielectric layer, wherein a waveguide structure and a first metal layer is disposed in the second dielectric layer, and the waveguide structure is electrically connected to the first metal layer;
an insulating layer, located on the second dielectric layer;
a third dielectric layer, located on the insulating layer, wherein a second metal layer is disposed in the third dielectric layer, and the second metal layer is electrically connected to the first metal layer by a via hole;
a metal gate layer, comprising a plurality of metal gate structures arranged spaced apart, wherein the plurality of metal gate structures are periodically arranged in a signal transmission direction of the waveguide structure, and the metal gate layer is insulated from the first metal layer and the second metal layer respectively.

2. The optical modulator according to claim 1, **characterized in that**, the second metal layer is electrically connected to the waveguide structure by the via hole and the first metal layer.

3. The optical modulator according to claim 1, **characterized in that**, the first dielectric layer is a silicon layer or a glass material layer.

4. The optical modulator according to claim 1, **characterized in that**, the first dielectric layer is formed on the second dielectric layer through bonding.

5. The optical modulator according to claim 1, **characterized in that**, the insulating layer and the third dielectric layer are manufactured from a same material.

6. The optical modulator according to claim 1, **characterized in that**, the metal gate layer is disposed within the third dielectric layer and is arranged spaced apart from the second metal layer, or the metal gate layer is disposed within the second dielectric layer and is arranged spaced apart from the first metal layer.

7. The optical modulator according to claim 1, **characterized in that**, the metal gate layer is disposed within the second dielectric layer and the third dielectric layer, and the metal gate layer is arranged spaced apart from the first metal layer and the second metal layer respectively.

8. The optical modulator according to claim 6 or 7, **characterized in that**, the metal gate layer comprises a first sub gate layer and a second sub gate layer, the first sub gate layer and the second sub gate layer are respectively symmetrically located on both sides of the second metal layer, the first sub gate layer and the second sub gate layer respectively comprise a plurality of gate structures periodically arranged in the signal transmission direction of the waveguide structure.

9. The optical modulator according to claim 6 or 7, **characterized in that**, the optical modulator comprises at least two layers of the second metal layer, the at least two layers of the second metal layer are electrically connected by the via hole, the metal gate layer comprises a plurality of first sub-gate structures periodically arranged in the signal transmission direction of the waveguide structure, and each of the plurality of first sub-gate structures is located in a gap between two adjacent via holes above a same second metal layer.

10. The optical modulator according to claim 9, **characterized in that**, the metal gate layer further comprises a plurality of second sub-gate structures periodically in the signal transmission direction of the waveguide structure, and each of the plurality of first sub-gate structures is provided on the insulating layer, and is alternatively arranged with each of the plurality of second sub-gate structures in the signal transmission direction of the waveguide structure.
